# EUROPEAN PATENT SPECIFICATION

(11) **EP 3 744 567 B1**
(45) Date of publication and mention of the grant of the patent: **11.01.2023**
(21) Application number: 19380010.9
(22) Date of filing: 30.05.2019
(51) Int. Cl.: B60P 3/40, F03D 13/40

(54) **A VEHICULE FOR TRANSPORTING A WIND TURBINE BLADE**
VEHIKEL ZUM TRANSPORT EINER WINDTURBINENSCHAUFEL
VÉHICULE POUR LE TRANSPORT D'UNE PALE D'ÉOLIENNE

(43) Date of publication of application: 02.12.2020
(73) Proprietor: SIEMENS GAMESA RENEWABLE ENERGY INNOVATION & TECHNOLOGY, S.L., 31621 Sarriguren (Navarra) (ES)
(72) Inventor: Iriarte Larumbe, Jose Luis, 31008 Pamplona (ES)
(74) Representative: SGRE-Association

(56) References cited:
- DE-A1-102012 021 613
- KR-B1- 100 934 204
- US-A- 4 505 347
- US-A- 6 024 184
- US-A1- 2015 321 596
- US-A1- 2015 337 799

## Description

### OBJECT OF THE INVENTION

The present invention is included in the technical field of vehicles for transportation of wind turbine blades. It relates in particular to a vehicle for the transportation of a blade for a wind turbine which incorporate traction, steering and suspension systems, capable of lifting the tip of the blade and tilting it for passing over obstacles encountered during transportation, and further capable of varying the overhang thereof according to national restrictions.

### BACKGROUND OF THE INVENTION

The new generations of wind turbine blades are extremely difficult to transport because of the lengths of over 70 m long and heavier weights. Due to that it is very difficult, and sometimes impossible, to access to harbours, to cross towns and cities, to take intersections, to take curves and to eventually reach remote wind farms.

Some vehicles are known in the state of art for transporting blades for a wind turbine. However, said vehicles that in the beginning were able to transport longer blades are becoming obsolete and do not have the manoeuvrability required for new dimensions of new generation blades.

Document EP 1 644 271 B1 discloses a system to stretch a curved blade by different means during transportation.

Document EP 1 659 026 B1 describes a system to pivot a blade from a horizontal position to an inclined position during transportation and to change the distance between ends of supporting means of the blade when the blade is pivoted.

Document EP 1 465 789 B1 and US2006/0285937 discloses a system to rotate a blade 90° about its own axis prior to transporting the blade under a bridge. Thereby, collision between the bridge and the blade can be prevented at the expense that horizontal dimension of the transport increases during transportation under the bridge.

Document US 2015/337799 A1 discloses a vehicle comprising the features of the preamble of claim 1.

Nonetheless, the documents mentioned encounter multiple problems for transporting new generation longer and heavier blades. These vehicles may not have the manoeuvrability required in terms of traction, steering, required overhang by national standards, capacity to pass over different obstacles along the roads, technical features which are necessary and essential to work simultaneously on the same vehicle for proper transportation of blades nowadays.

### DESCRIPTION OF THE INVENTION

A vehicle for transporting a wind turbine blade is disclosed herein with which it has been found that at least the above disadvantages relating to the prior art solutions are mitigated.

More in particular, according to a first aspect of the invention, there is provided a vehicle intended to be towed by a truck for transporting a wind turbine blade comprising a rear portion and a front portion, the front portion configured to be firmly attached to a front rotatory table able to rotate freely on longitudinal axis and vertical axis thereof and operatively mounted on the truck and the rear portion configured to be firmly attached to a rear rotatory table operatively mounted on the vehicle, wherein the vehicle further comprises:
- a main frame comprising at least two semi-axles, each semi-axle comprising at least two wheels, a suspension system, a steering system and a traction system,
- a lifting system comprising a lift actuator intended to lift the rear rotatory table with the rear part of the blade securely mounted thereof, wherein said rear rotatory table comprises an actuator able to transmit steering to the semi-axles proportionally to the front rotatory table rotation and further comprising a tilting system configured to tilt the blade on longitudinal axis thereof,
- a power system and a control system able to manually and remotely control at least any one of: the steering systems, the traction system, the lifting system or the suspension system and
a sliding system comprising a structure intended to be securely attached to the rear portion of the blade and sliding guides configured to slide through the rear rotatory table allowing to vary overhang of the blade.

Note that the overhang of the load can be reduced or increased at will, thus meeting the local traffic restrictions.

Where a change of the overhang is needed to overcome the obstacles in the route, that the rear part of the blade should be anchored to the structure with a length equal to or greater than the variation of the required overhang.

The sliding guide may have a number of holes machined to lock the rear rotatory table according to the required overhang. The adjustment of the overhang should be done with the lifting system folded or "not lifted", in order to have access to the sliding the guide and the rear rotatory table locks.

In some embodiments, the steering system may comprise steering rods, a system of levers and actuators able to provide movement to the steering system up to substantially 60° in relation to the truck.

The steering system may comprise an actuator mounted directly on each semi-axle able to provide movement ± 90° (180°) in relation to the truck. I.e. 90° in one direction and 90° in the other direction, achieving a total breadth of 180°.

Note that for those cases where great manoeuvrability is required, the vehicle may have a manual steering system, which activates and deactivates the automatic steering mode, allowing ± 90° (180°) steering angles, depending on steering system selection.

When the steering is on automatic mode, the vehicle follows the path of the truck by means of the rear rotatory table configured to transmit steering to the semi-axles proportionally to the front rotatory table rotation.

Preferably, the traction system comprises a variable flow hydraulic pump in the centre of at least one semi-axle for transmitting the movement to the wheels. More preferably, each semi-axle comprises a traction system comprising a variable flow hydraulic pump.

The hydraulic pump may be electronically controlled by the control system to modify the rotation speed at will and configured to automatically disconnect at a certain speed of the vehicle, in such a way that the semi-axles are dragged by the truck with minimum friction.

The vehicle is therefore capable of trajectories at an angle of 90° relative to the truck's trajectory, supported by a powerful traction system capable of manoeuvrability with the blade elevated to a certain height to avoid obstacles near the truck.

Preferably, all systems mentioned, in addition to the suspension, lights, brakes, can be controlled at will by the control system which comprises a triple system comprising a manual, an electric and a radio frequency system which take the necessary energy from the power system of the vehicle.

Preferably, the suspension comprises actuators on the semi-axles, a hydraulic system and solenoid valves.

The suspension system may comprise a first suspension actuator in an upper part of each semi-axle fixed to the main frame and a second movable actuator fixed to the wheel by an arm and an oscillating axle.

Preferably, the actuator of the rear rotatory table is a hydraulic actuator able to transmit steering to the semi-axles proportionally to the front rotatory table rotation to allow the vehicle to follow the same path as the towing truck. Said rear rotatory table may further comprise rotation sensors intended to limit the maximum rotation when the rear rotatory table is lifted or "unfolded".

The actuators of each semi-axle may be connected by hoses to other actuators, which depending on the load of the blade and the type of transport can form a suspension in triangular or rectangle mode intended for balancing the load and distributing the weight among all the semi-axles, giving great stability to the transport. Preferably, by joining actuators with each other in a closed circuit, the fluid leaving one must enter another, which greatly facilitates being able to circulate in any type of road with minimal variations in the levelling of the load.

Preferably, the lifting system comprises a platform, a base and a cross profile structure intended to fold and unfold maintaining the lifting platform parallel to the base.

Preferably, the main frame is formed by an electrowelded and mechanized metal structure of adequate strength, in which the axles are housed with their suspension and traction system, in addition to the steering system.

Preferably, the power system and the control centre are housed in an adjoining cabin, which includes all the installations, commands and safety elements necessary for the work of the vehicle within the strictest safety margins.

Preferably, the power system comprises a combustion engine capable of generating enough energy to run the hydraulic traction system and at the same time provide enough energy to charge batteries for the operation of solenoid valves, sensors and other devices previously mentioned.

Preferably, the control system comprises an electronic panel connected thereof for controlling any one of the steering systems, the lifting system or the traction system. More preferable, capable of controlling all described systems.

Preferably, the control system comprises a radio control system comprising strategically placed transmitters and receivers for controlling any one of the steering systems, the lifting system or the traction system. More preferable, capable of controlling all described systems.

### DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:
Figure 1.- illustrates the blade firmly attached to the front rotatory table operatively attached to the truck and to the rear rotatory table operatively attached on the vehicle.
Figure 2.- illustrates an upper view of the vehicle for transporting blades, clearly showing the semi-axles and the rear rotatory table.
Figure 3.- illustrates the lifting system "folded" and "unfolded" and the rear rotatory table.
Figure 4.- Illustrates the rear rotatory table in a preferred embodiment, wherein figure 4a shows the vertical angle of rotation of the rear rotatory table and 5b shows the horizontal angle of rotation of the rear rotatory table.
Figure 5.- Illustrates the front rotatory table in a preferred embodiment, wherein figure 5a shows the vertical angle of rotation of the front rotatory table and 5b the horizontal angle of rotation of the front rotatory table.
Figure 6.- Illustrates the sliding system, where it can be clearly seen the structure configured to slide on the rear rotatory table and securely attached to the rear part of the blade.
Figure 7.- Illustrates the sliding system configured to vary the required overhang at will.
Figure 8.- Iillustrates a view in perspective of the structure of the sliding system wherein the sliding guides and attach mechanism are showed in detail.
Figure 9.- Illustrates the traction system comprising a hydraulic pump.
Figure 10.- Illustrates the steering system comprising an actuator directly mounted on the semi-axle according to a preferred embodiment of the invention.
Figure 11.- Illustrates the suspension system according to a preferred embodiment of the invention.
Figure 12.- illustrates some of the possibilities of manoeuvrability for the vehicle to pass over possible obstacles

### PREFERRED EMBODIMENT OF THE INVENTION

A detailed explanation of an example of preferred embodiment of the object of the present invention is provided below, with the aid of the aforementioned figures.

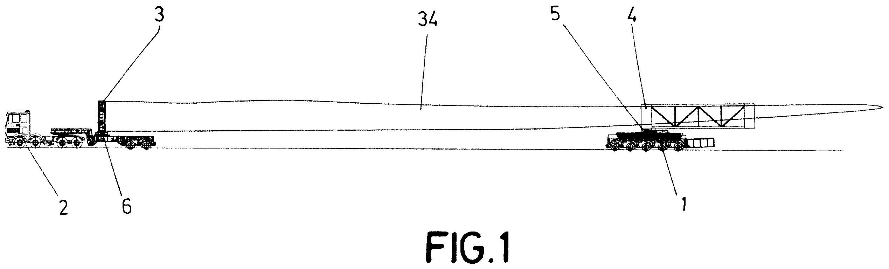

Figure 1 illustrates a vehicle (1) intended to be towed by a truck (2) for transporting a wind turbine blade (34) comprising a rear portion (4) and a front portion (3), the front portion (3) configured to be firmly attached to a front rotatory table (6) able to rotate freely on the longitudinal axis and the vertical axis thereof and operatively mounted on the truck (2) and the rear portion (4) of the blade configured to be firmly attached to a rear rotatory table (5) operatively mounted on the vehicle (1).

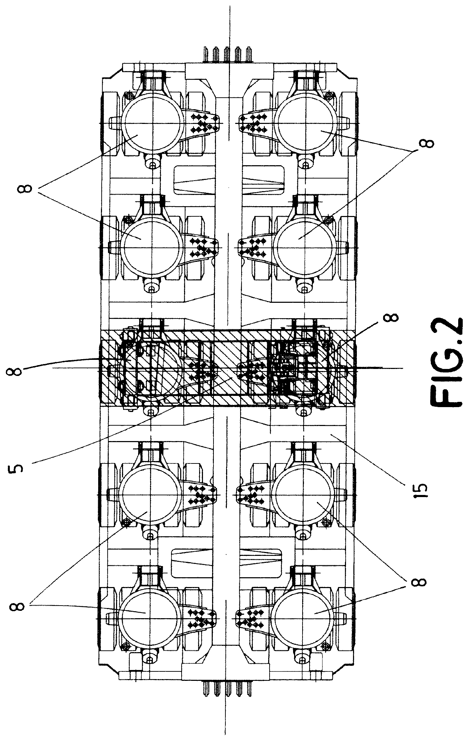

Figure 2 illustrates an upper view of the vehicle (1), comprising an electro welded and mechanized metal mainframe (15). Each semi-axle (8) in a preferred embodiment is independent, more in particular in said embodiment, the vehicle (1) comprises ten semi-axles (8), with five on each side, in which the semi-axles (8) are each housed with a suspension system (9). Each semi-axle (8) can be connected to the steering system (10) in a preferred embodiment or alternatively some of them can be fixed. Alike, each semi-axle (8) are provided with traction systems (11) in a preferred embodiment, or alternatively at least some of the semi-axle (8) are provided with traction (11) thereof.

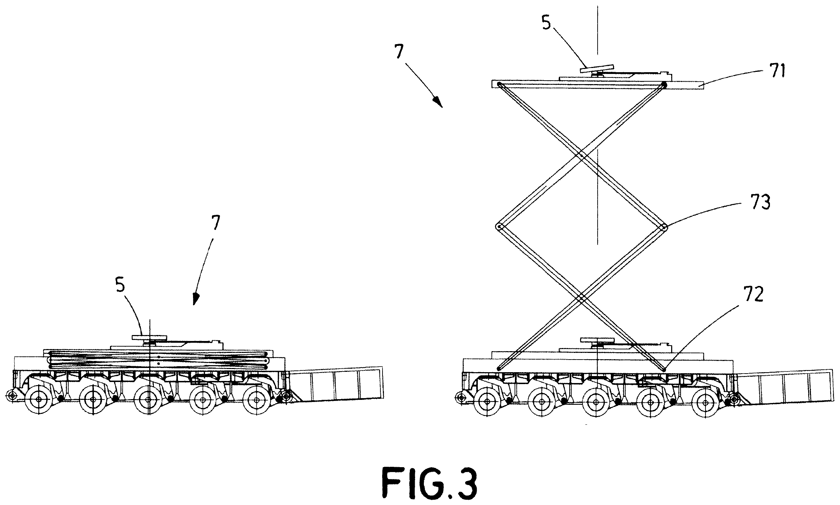

Figure 3 illustrates a lifting system (7) comprising a hydraulic actuator (not shown) intended to lift the rear rotatory table (5) with the rear portion (4) of the blade securely mounted thereof.

The lifting system further comprises a platform (71), a base (72) and a cross profile structure (73) intended to fold and unfold maintaining the lifting platform (71) parallel to the base as shown in Figure 3.

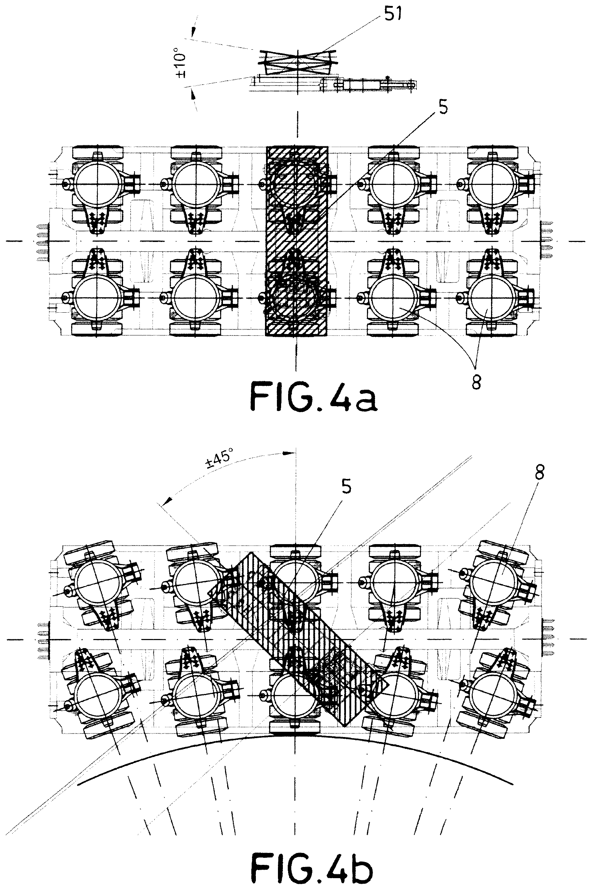

Figure 4 illustrates the rear rotatory table (5) in a preferred embodiment, wherein the horizontal and vertical angles of rotation are illustrated, approximately 45° and 10° respectively. Figure 4a illustrates the rear rotatory table (5) comprising a tilt system (51) for enabling vertical rotation configured to tilt the blade on longitudinal axis thereof.

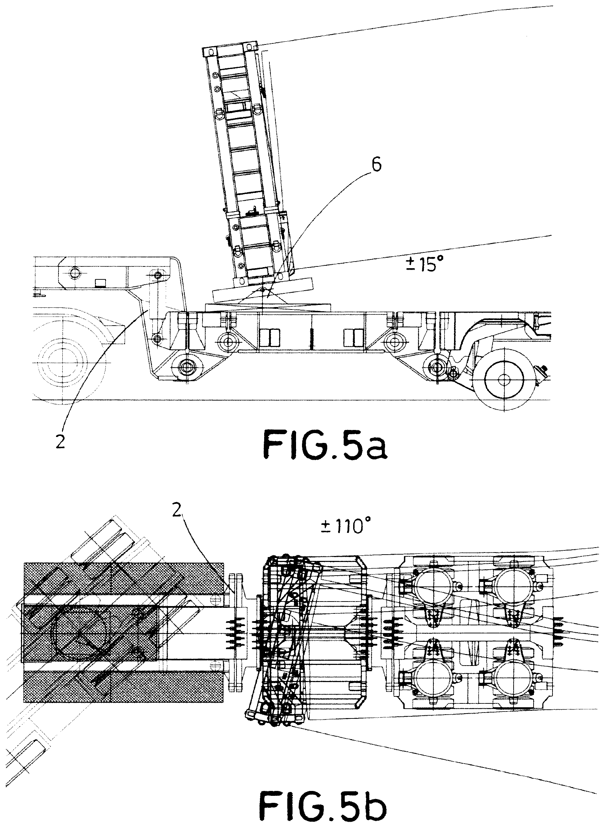

Figure 5 illustrates the front rotatory table (6) in a preferred embodiment, wherein the horizontal and vertical angles of rotation are illustrated, approximately 45° and 10° respectively. Figure 5a shows the front rotatory table (6) comprising a tilt system (61) for enabling vertical rotation configured to tilt the blade (34) on longitudinal axis thereof. Figure 5b shows an embodiment of the horizontal angle of rotation of the front rotatory table (6).

Figure 5b shows an embodiment of the horizontal angles of rotation of the rear rotatory table (5). The displacement actuators are provided in the rear rotatory table (5), which at rotating, transmit the steering to the semi-axles (8).

The vehicle is configured so that when the rear table (5) turns to one side by the action of the load, the displacement of actuators causes the vehicle to turn to that same side, providing the proper rotation to the semi-axles (8) so that the vehicle (1) turns at the proper angle for the dolly to pass where the truck (2) has passed.

The load must be firmly attached to the front rotary table (6) and to the vehicle rear rotary table (5), so that when the truck takes a curve or a slope, the load turns freely and takes the angle corresponding to the layout and the slope of the route where the convoy is driving. In addition, when the load is lifted at the rear by the lift, the front rotatory table (6) must absorb this rotation.

The vehicle (1) comprises a control system (not shown) comprising an electronic panel connected thereof for controlling any one of the steering systems (10), the lifting system and the traction system (11). The control system (not shown) further comprises a remote radio control system comprising strategically placed transmitters and receivers for controlling the steering system (10), the lifting system (7) and the traction system (11).

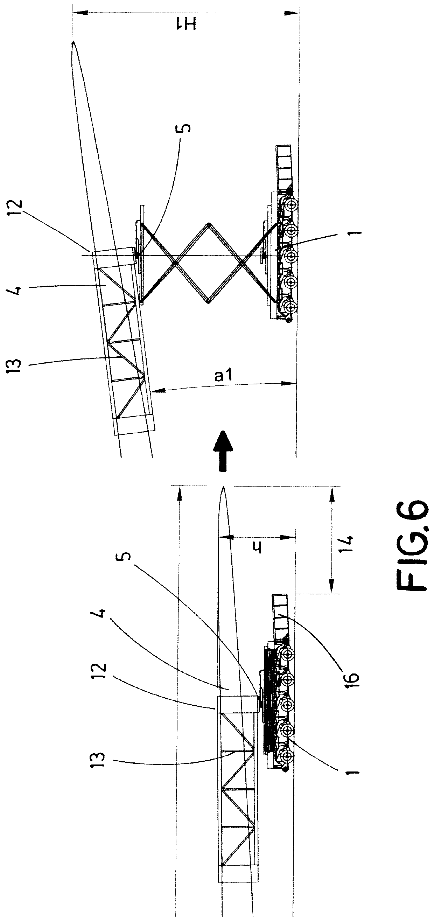

Figure 6 illustrates the vehicle (1) incorporating a sliding system (12) comprising a structure (13) intended to be securely attached to the rear portion (4) of the blade (34) and sliding guides (121) configured to slide through the rear rotatory table (5) allowing to vary overhang (14) of the blade (34).

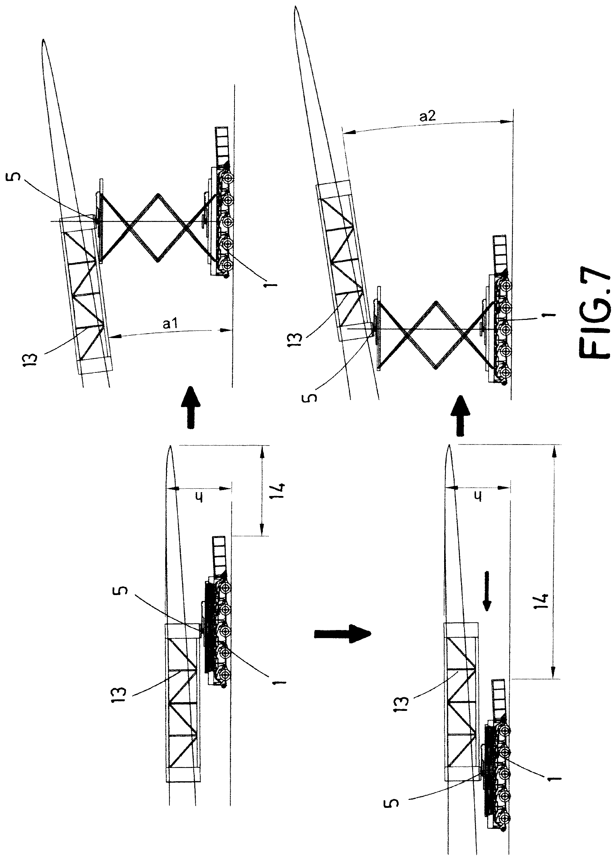

Figure 7 illustrates how the overhang of the blade can be reduced or increased at will, thus meeting the local traffic restrictions. Where a change of the overhang is needed to overcome the obstacles in the route, it is required that the rear potion of the blade (34) is anchored to the structure (13) with a length equal to or greater than the variation of the required overhang (14).

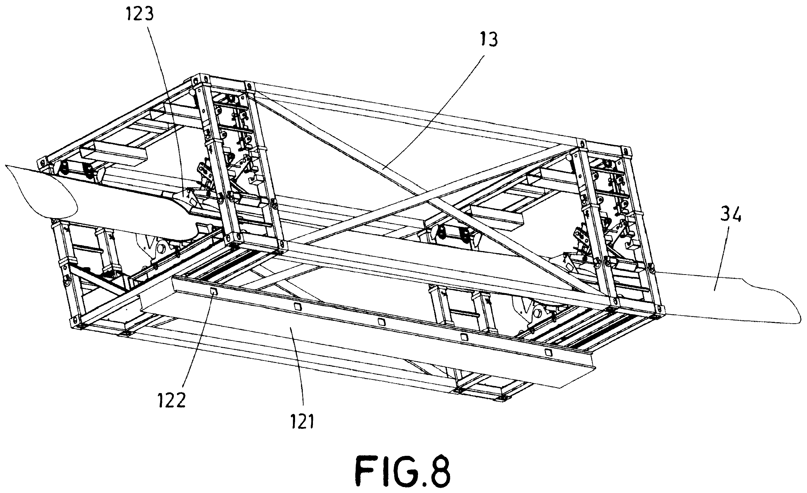

Figure 8 illustrates the structure (13) of the sliding system (12) wherein the sliding guides (121) are shown in detail. Said sliding guides (121) have a number of holes (122) machined to lock the rear rotatory table (5) according to the required overhang (14). The adjustment of the overhang (14) should be done with the lifting system (7) folded or "not lifted", in order to have access to the sliding the guide and the rear rotatory table (5) locks.

Furthermore, Figure 8 clearly shows a mechanism (123) according to a preferred embodiment, configured to firmly attached the blade to the structure (13) and hence to the rear rotatory table (5).

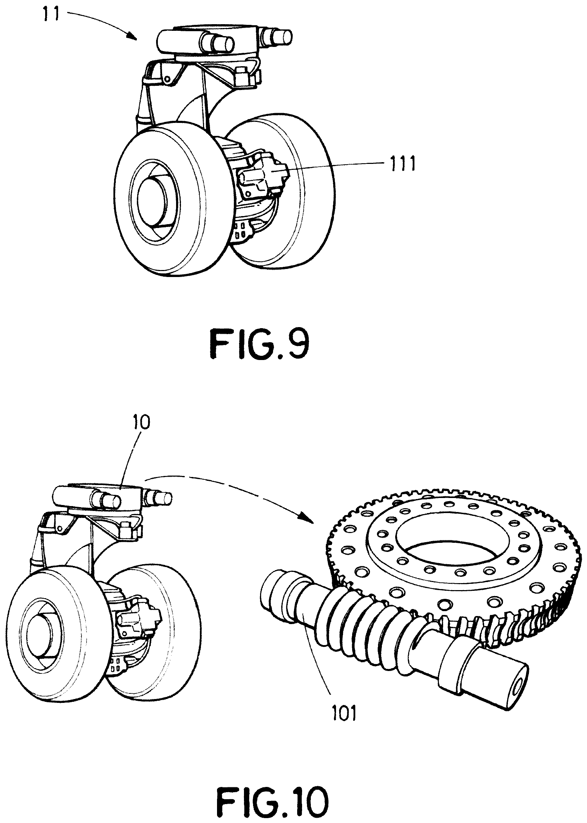

Figure 9 illustrates the traction system (11) comprising a variable flow hydraulic pump (111) in the centre of the two semi-axles (8) for transmitting the movement to the wheels. Wherein said hydraulic pump (111) is electronically controlled by the control system to be able to modify the rotation speed at will and configured to automatically disconnect at a certain speed, in such a way that the semi-axles (8) are dragged by the truck (2) with minimum friction.

Figure 10 illustrates the steering system (10) for a preferred embodiment described above. More in particular, Fig.10 shows a steering system (10) comprising an actuator (101) directly mounted in each semi-axle (8) intended for providing movement ± 90° (180°) in relation to the truck (2). I.e. 90° in one direction and 90° in the other direction, achieving a total breadth of 180°.

In the preferred embodiment above mentioned, the suspension system (9) is a direct thrust steering, so the system operates by means of software that commands the actuators (101) and can make the semi-axes (8) rotate in any direction according to the established programming.

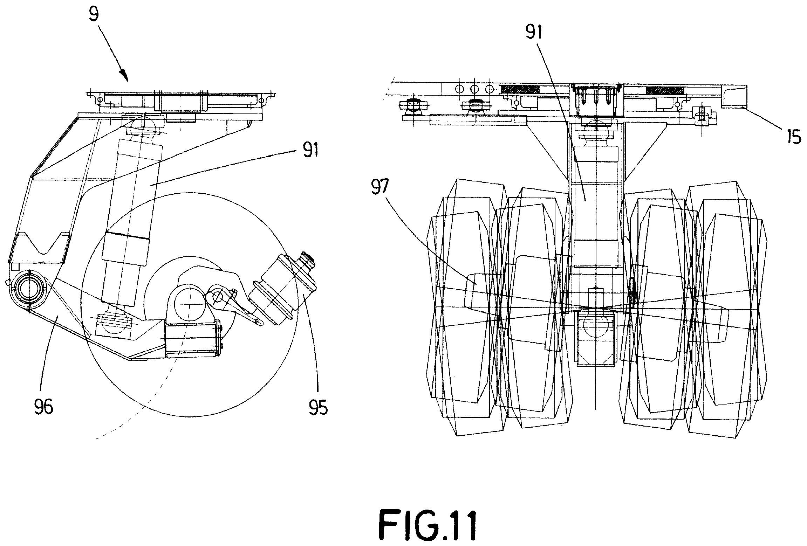

Figure 11 illustrates an exemplary suspension system (9), in the preferred embodiment being described. The suspension system (9) comprises comprises actuators (91) on the semi-axles (8), a hydraulic system (92) and solenoid valves (93). The actuators (91) comprising a first suspension actuator (94) in an upper part of each semi-axle (8) fixed to the main frame (15) and a second actuator (95) fixed to the wheel by an arm (96) and an oscillating axle (97) as shown in Figure 8.

The vehicle (1) further comprises a power system (16) and batteries (not shown), wherein the power system (16) consists of a combustion engine capable of generating enough energy to run the hydraulic system and at the same time provide enough energy to charge the batteries for the operation of all systems and devices above described.

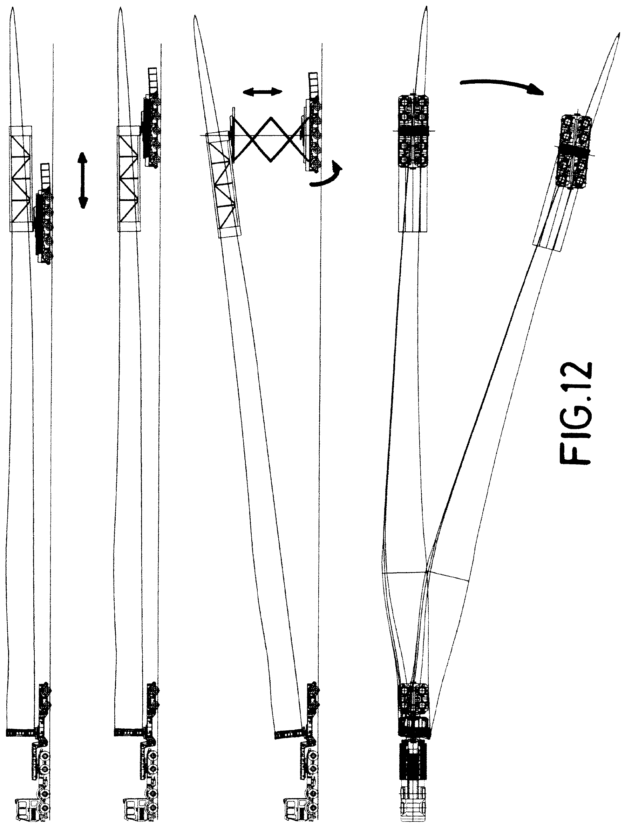

Figure 12 illustrates some of the possibilities of manoeuvrability for the vehicle to pass over possible obstacles. It clearly shows how the vehicle (1) can adjust elevation at the rear portion (4) of the blade (34), change direction with manual steering at up to 90° angles with respect to the truck (2), adjust overhang (14) to required national restrictions and to provide traction for difficult terrain and slopes, being able to successfully transport new generation longer and heavier blades (34) to remote wind farms.

## Claims

1. - A vehicle (1) intended to be towed by a truck (2) for transporting a wind turbine blade (34) comprising a rear portion (4) and a front portion (3), the front portion (3) configured to be firmly attached to a front rotatory table (6) able to rotate freely on longitudinal axis and vertical axis thereof and operatively mounted on the truck (2) and the rear portion (4) configured to be firmly attached to a rear rotatory table (5) operatively mounted on the vehicle (1), wherein the vehicle (1) further comprises:
- a main frame (15) comprising at least two semi-axles (8), each semi-axle (8) comprising at least two wheels, a suspension system (9), a steering system (10) and a traction system (11),
- a lifting system (7) comprising a lift actuator intended to lift the rear rotatory table (5) with the rear portion (4) of the blade (34) securely mounted thereof, wherein said rear rotatory table (5) comprises an actuator able to transmit steering to the semi-axles proportionally to the front rotatory table (6) rotation and further comprising a tilting system (51,61) configured to tilt the blade (34) on longitudinal axis thereof,
- a power system (16) and a control system able to manually and remotely control any one of the steering systems (10), the traction system (11), the lifting system (7) or the suspension system (9); **characterized in that** the vehicle (1) further comprises a sliding system (12) comprising a structure (13) intended to be securely attached to the rear portion (4) of the blade and sliding guides (121) configured to slide through the rear rotatory table (5) allowing to vary overhang (14) of the blade (34).

2. - Vehicle (1) according to claim 1, **characterized in that** the steering system (10) comprises steering rods, a system of levers and actuators able to provide movement up to substantially 60° in relation to the truck (2).

3. - Vehicle (1) according to claim 1, **characterized in that** the steering system (10) comprises an actuator (101) mounted directly on each semi-axle (8) able to provide movement of ± 90° (180°) in relation to the truck (2).

4. - Vehicle (1) according to claim 1, **characterized in that** the traction system (11) comprises a variable flow hydraulic pump (111) in the centre of at least one semi-axle (8) for transmitting movement to the wheels.

5. - Vehicle (1) according to claim 4, **characterized in that** the hydraulic pump (111) is electronically controlled by the control system able to modify the rotation speed and configured to automatically disconnect at a certain speed.

6. - Vehicle (1) according to claim 1, **characterized in that** the suspension system (9) comprises actuators on the semi-axles (8), a hydraulic system and solenoid valves.

7. Vehicle (1) according to claim 6, **characterized in that** comprises a first suspension actuator (91) in an upper part of each semi-axle (8) fixed to the main frame (15) and a second actuator (95) fixed to the wheel by an arm (96) and an oscillating axle (97).

8. - Vehicle (1) according to claim 1, **characterized in that** the actuator of the rear rotatory table (5) is a hydraulic actuator able to transmit steering to the semi-axles (8) proportionally to the front rotatory table (6) rotation to allow the vehicle (1) to follow the same path as the towing truck (2).

9. - Vehicle (1) according to claim 8, **characterized in that** the rear rotatory table (5) further comprises rotation sensors intended to limit the maximum rotation when the rear rotatory table (5) is lifted.

10. - Vehicle according to claim 9, **characterized in** the lifting system (7) comprises a platform (72), a base (72) and a cross profile structure (73) intended to fold and unfold maintaining the platform (72) parallel to the base (72).

11. - Vehicle according to claim 1, **characterized in that** the control system comprises an electronic panel connected thereof for controlling any one of the steering systems (10), the lifting system (7) or the traction system (11).

12. - Vehicle according to claim 1, **characterized in** the control system comprises a radio control system comprising strategically placed transmitters and receivers for controlling any one of the steering systems (10), the lifting system (7) or the traction system (11).

13. Vehicle according to claim 1, **characterized in** the power system (16) comprises a combustion engine.

## Patentansprüche

1. Fahrzeug (1), das dazu vorgesehen ist, durch einen Lastkraftwagen (2) zum Transportieren eines Windenergieanlagenblatts (34) gezogen zu werden, das einen hinteren Abschnitt (4) und einen vorderen Abschnitt (3) umfasst, wobei der vordere Abschnitt (3) dazu ausgelegt ist, fest an einem vorderen Drehtisch (6) angebracht zu sein, der in der Lage ist, sich frei auf einer Längsachse und Vertikalachse davon zu drehen, und betriebsfähig an dem Lastkraftwagen (2) montiert ist, und wobei der hintere Abschnitt (4) dazu ausgelegt ist, fest an einem hinteren Drehtisch (5) angebracht zu sein, der betriebsfähig an dem Fahrzeug (1) montiert ist, wobei das Fahrzeug (1) ferner Folgendes umfasst:
- einen Hauptrahmen (15), der mindestens zwei Halbachsen (8) umfasst, wobei jede Halbachse (8) mindestens zwei Räder, ein Aufhängungssystem (9), ein Lenksystem (10) und ein Traktionssystem (11) umfasst,
- ein Hubsystem (7), das einen Hubaktuator umfasst, der dazu vorgesehen ist, den hinteren Drehtisch (5) mit dem hinteren Abschnitt (4) des Blatts (34), der sicher daran montiert ist, anzuheben, wobei der hintere Drehtisch (5) einen Aktuator umfasst, der in der Lage ist, eine Lenkung auf die Halbachsen proportional zu einer Drehung des vorderen Drehtischs (6) zu übertragen, und das ferner ein Neigesystem (51, 61) umfasst, das dazu ausgelegt ist, das Blatt (34) an einer Längsachse davon zu neigen,
- ein Leistungssystem (16) und ein Steuersystem, das in der Lage ist, ein beliebiges der Lenksysteme (10), des Traktionssystems (11), des Hubsystems (7) oder des Aufhängungssystems (9) manuell und entfernt zu steuern; **dadurch gekennzeichnet, dass** das Fahrzeug (1) ferner Folgendes umfasst:
ein Gleitsystem (12), das eine Struktur (13), die dazu vorgesehen ist, sicher an dem hinteren Abschnitt (4) des Blatts angebracht zu sein, und Gleitführungen (121) umfasst, die dazu ausgelegt sind, durch den hinteren Drehtisch (5) zu gleiten, wodurch ermöglicht wird, einen Überhang (14) des Blatts (34) zu variieren.

2. Fahrzeug (1) nach Anspruch 1, **dadurch gekennzeichnet, dass** das Lenksystem (10) Lenkstangen, ein System von Hebeln und Aktuatoren umfasst, die in der Lage sind, eine Bewegung bis zu im Wesentlichen 60° in Relation zu dem Lastkraftwagen (2) bereitzustellen.

3. Fahrzeug (1) nach Anspruch 1, **dadurch gekennzeichnet, dass** das Lenksystem (10) einen Aktuator (101) umfasst, der direkt an jeder Halbachse (8) montiert ist, der in der Lage ist, eine Bewegung von ± 90° (180°) in Relation zu dem Lastkraftwagen (2) bereitzustellen.

4. Fahrzeug (1) nach Anspruch 1, **dadurch gekennzeichnet, dass** das Traktionssystem (11) eine Hydraulikpumpe (111) mit variablem Durchfluss in der Mitte von mindestens einer Halbachse (8) zum Übertragen einer Bewegung auf die Räder umfasst.

5. Fahrzeug (1) nach Anspruch 4, **dadurch gekennzeichnet, dass** die Hydraulikpumpe (111) elektronisch durch das Steuersystem gesteuert ist, das in der Lage ist, die Drehzahl zu modifizieren, und dazu ausgelegt ist, bei einer gewissen Drehzahl automatisch zu trennen.

6. Fahrzeug (1) nach Anspruch 1, **dadurch gekennzeichnet, dass** das Aufhängungssystem (9) Aktuatoren an den Halbachsen (8), ein Hydrauliksystem und Magnetventile umfasst.

7. Fahrzeug (1) nach Anspruch 6, **dadurch gekennzeichnet, dass** es einen ersten Aufhängungsaktuator (91) in einem oberen Teil jeder Halbachse (8), der an dem Hauptrahmen (15) fixiert ist, und einen zweiten Aktuator (95), der an dem Rad durch einen Arm (96) und eine oszillierende Achse (97) fixiert ist, umfasst.

8. Fahrzeug (1) nach Anspruch 1, **dadurch gekennzeichnet, dass** der Aktuator des hinteren Drehtischs (5) ein hydraulischer Aktuator ist, der in der Lage ist, eine Lenkung auf die Halbachsen (8) proportional zu einer Drehung des vorderen Drehtischs (6) zu übertragen, um dem Fahrzeug (1) zu ermöglichen, demselben Weg wie der ziehende Lastkraftwagen (2) zu folgen.

9. Fahrzeug (1) nach Anspruch 8, **dadurch gekennzeichnet, dass** der hintere Drehtisch (5) ferner Drehsensoren umfasst, die dazu vorgesehen sind, die maximale Drehung zu begrenzen, wenn der hintere Drehtisch (5) angehoben wird.

10. Fahrzeug nach Anspruch 9, **dadurch gekennzeichnet, dass** das Hubsystem (7) eine Plattform (72), eine Basis (72) und eine Querprofilstruktur (73) umfasst, die dazu vorgesehen ist, auszuklappen und einzuklappen, während die Plattform (72) parallel zu der Basis (72) gehalten wird.

11. Fahrzeug nach Anspruch 1, **dadurch gekennzeichnet, dass** das Steuersystem eine damit verbundene elektronische Tafel zum Steuern eines beliebigen der Lenksysteme (10), des Hubsystems (7) oder des Traktionssystems (11) umfasst.

12. Fahrzeug nach Anspruch 1, **dadurch gekennzeichnet, dass** das Steuersystem ein Funksteuersystem umfasst, das strategisch platzierte Sender und Empfänger zum Steuern eines beliebigen der Lenksysteme (10), des Hubsystems (7) oder des Traktionssystems (11) umfasst.

13. Fahrzeug nach Anspruch 1, **dadurch gekennzeichnet, dass** das Leistungssystem (16) eine Brennkraftmaschine umfasst.

## Revendications

1. Véhicule (1) destiné à être remorqué par un camion (2) pour transporter une pale d'éolienne (34) qui comprend une section arrière (4) et une section avant (3), la section avant (3) étant configurée pour être liée fermement à un plateau rotatif avant (6) qui peut être entraîné en rotation librement sur son axe longitudinal et sur son axe vertical et qui est monté de manière opérationnelle sur le camion (2) et la section arrière (4) étant configurée pour être liée fermement à un plateau rotatif arrière (5) qui est monté de manière opérationnelle sur le véhicule (1), dans lequel le véhicule (1) comprend en outre:
- un châssis principal (15) qui comprend au moins deux demi-essieux (8), chaque demi-essieu (8) comprenant au moins deux roues, un système de suspension (9), un système de direction (10) et un système de traction (11) ;
- un système de levage (7) qui comprend un actionneur de levage destiné à lever le plateau rotatif arrière (5) sur lequel la section arrière (4) de la pale (34) est montée de façon sécurisée, dans lequel ledit plateau rotatif arrière (5) comprend un actionneur qui peut transmettre la direction aux demi-essieux proportionnellement à la rotation du plateau rotatif avant (6), et qui comprend en outre un système d'inclinaison (51, 61) qui est configuré pour incliner la pale (34) sur son axe longitudinal ;
- un système d'alimentation en puissance (16) et un système de commande qui peut commander manuellement et à distance l'un quelconque des systèmes parmi le système de direction (10), le système de traction (11), le système de levage (7) et le système de suspension (9) ;
**caractérisé en ce que** le véhicule (1) comprend en outre un système de coulissement (12) qui comprend une structure (13) destinée à être liée de façon sécurisée à la section arrière (4) de la pale et des guides de coulissement (121) qui sont configurés pour coulisser au travers du plateau rotatif arrière (5), ce qui permet de modifier le surplomb (14) de la pale (34).

2. Véhicule (1) selon la revendication 1, **caractérisé en ce que** le système de direction (10) comprend des barres de direction, un système de leviers et d'actionneurs qui permet d'effectuer un mouvement jusqu'à sensiblement 60° en relation avec le camion (2).

3. Véhicule (1) selon la revendication 1, **caractérisé en ce que** le système de direction (10) comprend un actionneur (101) qui est monté directement sur chaque demi-essieu (8) et qui permet d'effectuer un mouvement de ± 90° (180°) en relation avec le camion (2).

4. Véhicule (1) selon la revendication 1, **caractérisé en ce que** le système de traction (11) comprend une pompe hydraulique à écoulement variable (111) au centre d'au moins un demi-essieu (8) pour transmettre le mouvement aux roues.

5. Véhicule (1) selon la revendication 4, **caractérisé en ce que** la pompe hydraulique (111) est commandée électroniquement par le système de commande, ce qui permet de modifier la vitesse de rotation, et est configurée pour être déconnectée automatiquement à une certaine vitesse.

6. Véhicule (1) selon la revendication 1, **caractérisé en ce que** le système de suspension (9) comprend des actionneurs sur les demi-essieux (8), un système hydraulique et des électrovannes.

7. Véhicule (1) selon la revendication 6, **caractérisé en ce qu'**il comprend un premier actionneur de suspension (91) dans une partie supérieure de chaque demi-essieu (8) qui est fixé au châssis principal (15) et un second actionneur (95) qui est fixé à la roue par un bras (96) et un essieu oscillant (97).

8. Véhicule (1) selon la revendication 1, **caractérisé en ce que** l'actionneur du plateau rotatif arrière (5) est un actionneur hydraulique qui permet de transmettre la direction aux demi-essieux (8) proportionnellement à la rotation du plateau rotatif avant (6) pour permettre que le véhicule (1) suive la même trajectoire que le camion de remorquage (2).

9. Véhicule (1) selon la revendication 8, **caractérisé en ce que** le plateau rotatif arrière (5) comprend en outre des capteurs de rotation qui sont destinés à limiter la rotation maximale lorsque le plateau rotatif arrière (5) est levé.

10. Véhicule selon la revendication 9, **caractérisé en ce que** le système de levage (7) comprend une plate-forme (71), une base (72) et une structure à profil transversal (73) qui est destinée à être repliée et dépliée en maintenant la plate-forme (71) parallèle à la base (72).

11. Véhicule selon la revendication 1, **caractérisé en ce que** le système de commande comprend un panneau électronique qui lui est connecté pour commander l'un quelconque des systèmes parmi le système de direction (10), le système de levage (7) et le système de traction (11).

12. Véhicule selon la revendication 1, **caractérisé en ce que** le système de commande comprend un système de commande radio qui comprend des émetteurs et des récepteurs placés stratégiquement pour commander l'un quelconque des systèmes parmi le système de direction (10), le système de levage (7) et le système de traction (11).

13. Véhicule selon la revendication 1, **caractérisé en ce que** le système d'alimentation en puissance (16) comprend un moteur à combustion.
